# EUROPEAN PATENT APPLICATION

(11) **EP 2 693 709 A1**
(43) Date of publication of application: **05.02.2014**
(21) Application number: 12764959.8
(22) Date of filing: 26.03.2012
(51) Int. Cl.: H04L 12/56, G06F 13/00

(54) **VIRTUAL DESKTOP SYSTEM, NETWORK PROCESSING DEVICE, MANAGEMENT METHOD, AND MANAGEMENT PROGRAM**

(30) Priority: 29.03.2011 JP 2011072934
(71) Applicant: NEC Corporation, Tokyo 108-8001 (JP)
(72) Inventor: TAKAHASHI, Atsushi, Tokyo 108-8001 (JP)
(74) Representative: Vossius & Partner
(86) International application number: PCT/JP2012/057742
(87) International publication number: WO 2012/133300

(57) **Abstract**

The virtual desktop system comprises a virtualization server including a virtual desktop, a thin client terminal which uses the virtual desktop in remote connection, and a plurality of network processing devices each of which connects the virtualization server and the thin client terminal, wherein each of the network processing devices includes an IP flow management unit which manages information of an IP flow related to the remote connection of the thin client terminal, and an IP flow state notification unit which, when receiving an IP packet related to the remote connection, if the IP flow related to the IP packet fails to satisfy a bandwidth or a delay time defined in advance, notifies the thin client terminal to that effect.

## Description

### CROSS REFERENCE TO RELATED APPLICATIONS

This application is a National Stage of International Application No. PCT/JP2012/057742 filed March 26, 2012, claiming priority based on Japanese Patent Application No. 2011-072934 filed March 29, 2011, the contents of all of which are incorporated herein by reference in their entirety.

### TECHNICAL FIELD

The present invention relates to a thin client system such as a virtual desktop system which is operable on a virtual machine on a server and provides an operating system (OS) environment through a network, and more particularly, a technique for allowing a user himself or herself to grasp a system operation condition.

### BACKGROUND ART

It has been a common practice for a personal computer (PC) to introduce and use one basic software (OS: Operation System).

In recent years, while software called server virtualization software has been provided, rapid speed-up of a local area network (LAN) has been in progress. This enables a user himself or herself to install an OS on a virtual machine operating on server virtualization software and use, from his/her own PC (hereinafter referred to as a thin client terminal), a PC environment through a network.

Such a form of use of a PC environment is referred to as a virtual desktop system or a thin client system.

The thin client system obtains advantages including reduction in information leakage risks because the system manages data on a server and including reduction in loads on a thin client terminal because most of processing is executed on a server side.

The virtual desktop system here represents a so-called screen-transfer type thin client system. In the virtual desktop system, operation information of a keyboard or a mouse is transmitted from a thin client terminal to a server and a result of processing obtained by the server based on the operation information is displayed as screen data on the thin client terminal.

The virtual desktop system has not only the same advantage as that the thin client system has but also an advantage of using a PC environment set for each user even when a user of the same client terminal varies.

Related art for the use of a virtual desktop system includes Patent Literature 1 to 3.

Patent Literature 1 provides a means for a user to know computer accessible time and a means for a manager to grasp a condition of computer operation on a virtual desktop.

Patent Literature 2 provides a means for grasping conditions of failures of a virtual device and a hardware device in a computer having a virtual desktop environment.

Patent Literature 3 provides a means which allows high-speed and high-efficient use of a virtual desktop environment.
Patent Literature 1: Japanese Patent Laying-Open No. 2008-123493
Patent Literature 2: Japanese Patent Laying-Open No. 2008-269194
Patent Literature 3: Japanese Patent Laying-Open No. 2007-198429
Non-Patent Literature 1: VMware vSphere, http://www.vmware.com/jp/products/vsphere/

The virtual desktop systems according to the background art have the following problems.

A first problem is that a user himself or herself of a virtual desktop environment is not allowed to grasp a remote connection condition. The reason is that only a screen image itself is transferred to a user side without a virtual desktop environment itself.

A second problem is difficulty in recovery by a user himself or herself such as restarting of a virtual desktop in a virtual desktop environment. The reason is that a network path operable by the user himself or herself will be lost when remote connection with the virtual desktop has a failure.

A third problem is difficulty in coping with a path failure caused by a network which uses a virtual desktop environment. The reason is that a remote connection program mounted for the use of a virtual desktop environment aims mainly at transferring a screen and therefore has no means for providing an end node with a network management means.

A fourth problem is that a network as a base of a virtual desktop environment according to the background art fails to have a traffic monitoring notification mechanism taking an application into consideration. The reason is that a main function provided by a background art network (mostly an IP network) is transfer of an IP packet and a function of a management mechanism taking an application into consideration is provided by an end node (a server, a PC client etc.) of a network edge. In addition, a main function of the end node is session management premised on that a communication state of an IP network is normal, so that the end node is incapable of grasping detailed contents of a failure and provides only recovery processing by a retry mechanism etc. upon time-out.

### (OBJECT OF THE INVENTION)

An object of the present invention is to solve the above-described problems and provide a virtual desktop system capable of grasping a system operation condition by a user himself or herself, a network processing device, and a management method and a management program thereof.

### SUMMARY

According to a first exemplary aspect of the invention, a virtual desktop system comprises a virtualization server including a virtual desktop, a thin client terminal which uses the virtual desktop in remote connection, and a plurality of network processing devices each of which connects the virtualization server and the thin client terminal,
wherein each of the network processing devices includes an IP flow management unit which manages information of an IP flow related to the remote connection of the thin client terminal, and an IP flow state notification unit which, when receiving an IP packet related to the remote connection, if the IP flow related to the IP packet fails to satisfy a bandwidth or a delay time defined in advance, notifies the thin client terminal to that effect.

According to a second exemplary aspect of the invention, in a virtual desktop system comprising a virtualization server including a virtual desktop, a thin client terminal which uses the virtual desktop in remote connection, and a plurality of network processing devices each of which connects the virtualization server and the thin client terminal, wherein each of the network processing devices comprises an IP flow management unit which manages information of an IP flow related to the remote connection of the thin client terminal, and an IP flow state notification unit which, when receiving an IP packet related to the remote connection, if the IP flow related to the IP packet fails to satisfy a bandwidth or a delay time defined in advance, notifies the thin client terminal to that effect.

According to a third exemplary aspect of the invention, a method of managing a virtual desktop system comprising a virtualization server including a virtual desktop, a thin client terminal which uses the virtual desktop in remote connection, and a plurality of network processing devices each of which connects the virtualization server and the thin client terminal, wherein each of the network processing devices performs an IP flow management step of managing information of an IP flow related to the remote connection of the thin client terminal, and an IP flow state notification step of, when receiving an IP packet related to the remote connection, if the IP flow related to the IP packet fails to satisfy a bandwidth or a delay time defined in advance, notifying the thin client terminal to that effect.

According to a fourth exemplary aspect of the invention, in a virtual desktop system comprising a virtualization server including a virtual desktop, a thin client terminal which uses the virtual desktop in remote connection, and a plurality of network processing devices each of which connects the virtualization server and the thin client terminal, a management program which is operable on each of the network processing devices and which causes the network processing devices to execute an IP flow management processing of managing information of an IP flow related to the remote connection of the thin client terminal, and an IP flow state notification processing of, when receiving an IP packet related to the remote connection, if the IP flow related to the IP packet fails to satisfy a bandwidth or a delay time defined in advance, notifying the thin client terminal to that effect.

The present invention enables a user himself or herself to grasp a system operation condition.

### BRIEF DESCRIPTION OF THE DRAWINGS

Fig. 1 is a block diagram showing a configuration of a virtual desktop system according to a first exemplary embodiment of the present invention;
Fig. 2 is a block diagram showing a configuration of a virtual desktop flow control management unit related to remote connection according to the first exemplary embodiment;
Fig. 3 is a block diagram showing a configuration related to propagation of IP flow information of a network processing device according to the first exemplary embodiment;
Fig. 4 is a diagram showing an example of a structure of an IP flow information management table 313 according to the first exemplary embodiment;
Fig. 5 is a block diagram showing a configuration related to IP flow state notification and path request of the virtual desktop system according to the first exemplary embodiment;
Fig. 6 is a flow chart showing operation of the virtual desktop system according to the first exemplary embodiment;
Fig. 7 is a block diagram showing an example of a hardware configuration of the network processing device of the present invention; and
Fig. 8 is a block diagram showing a minimum configuration of the virtual desktop system of the present invention.

### EXEMPLARY EMBODIMENT

In order to clarify the foregoing and other objects, features and advantages of the present invention, an exemplary embodiment of the present invention will be detailed in the following with reference to the accompanying drawings. Technical problems, means for solving the technical problems, and functions and effects thereof other than the above-described objects of the present invention will become more apparent from the following disclosure of the exemplary embodiment.

In all the drawings, like components are identified by the same reference numerals to appropriately omit description thereof.

### (FIRST EXEMPLARY EMBODIMENT)

A first exemplary embodiment of the present invention will be detailed with reference to the drawings. In the following drawings, no description is made of a configuration of a part not related to a gist of the present invention and no illustration is made thereof.

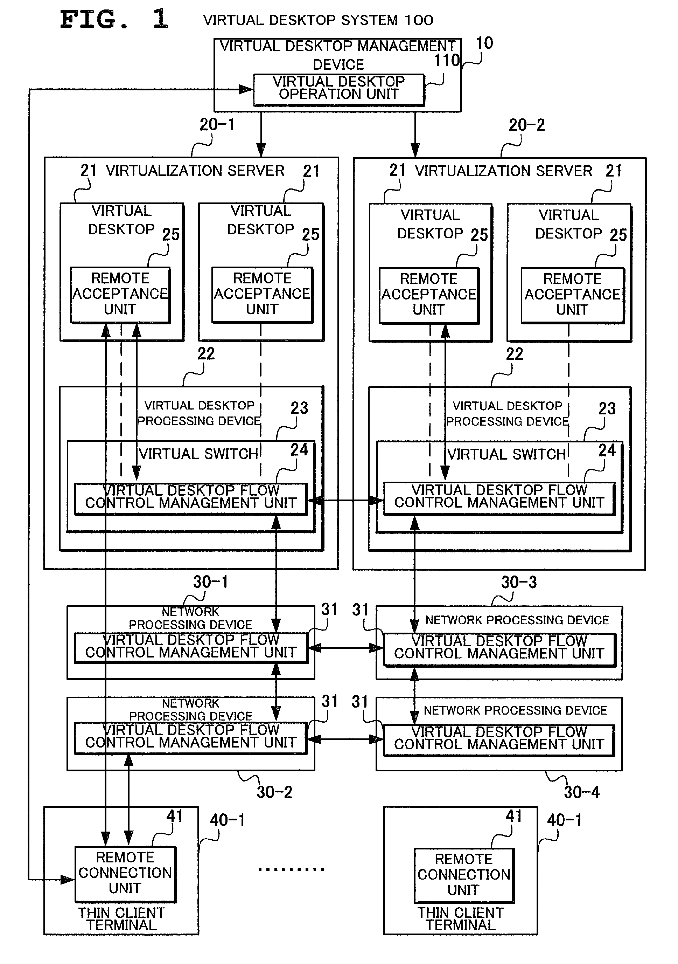

Fig. 1 is a block diagram showing a configuration related to remote connection of a virtual desktop system 100 according to the present exemplary embodiment.

With reference to Fig. 1, the virtual desktop system 100 according to the present exemplary embodiment includes a virtual desktop management device 10, a virtualization server 20 (20-1, 20-2), a network processing device 30 (30-1 to 30-4) and at least one thin client terminal 40 (40-1 to 40-n).

In the present exemplary embodiment, although the system is structured to have two virtualization servers and four network processing devices, the number of virtualization servers and the number of network processing devices are not limited thereto.

The thin client terminal 40 includes a remote connection unit 41.

The remote connection unit 41 requests a remote acceptance unit 25 which will be described later for connection. Upon an allowance of connection from the remote acceptance unit 25, remote connection is completed between the remote connection unit 41 and the remote acceptance unit 25.

The virtualization server 20 includes at least one virtual desktop 21, a virtual desktop processing device 22 and a virtual switch 23 operable in the virtual desktop processing device.

In the present exemplary embodiment, although the virtualization server 20 is structured to have two virtual desktops, the number of the servers is not limited thereto.

The virtual desktop 21 includes the remote acceptance unit 25.

The remote acceptance unit 25 has a function of executing remote connection with remote connection unit 41 of the thin client terminal 40.

Upon receiving a connection request from the remote connection unit 41, the remote acceptance unit 25 notifies a connection allowance when the connection is possible. This establishes remote connection.

The virtual switch 23 is a virtualized network switch which has a function of external communication.

The virtual switch 23 includes a virtual desktop flow control management unit 24.

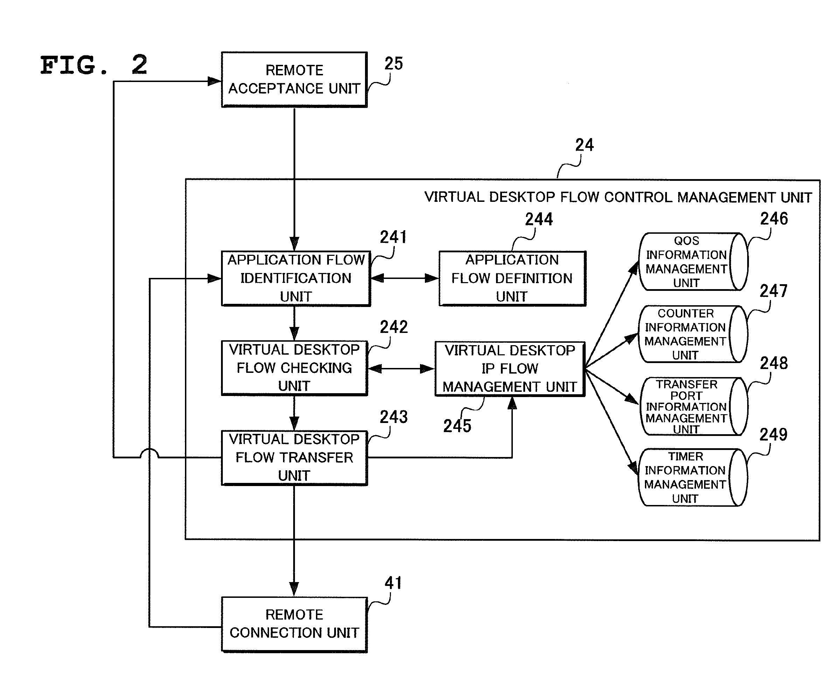

Configuration of the virtual desktop flow control management unit 24 related to remote connection is here shown in Fig. 2.

With reference to Fig. 2, the virtual desktop flow control management unit 24 includes an application flow identification unit 241, a virtual desktop flow checking unit 242, a virtual desktop flow transfer unit 243, an application flow definition unit 244, a virtual desktop IP flow management unit 245, a QoS information management unit 246, a counter information management unit 247, a transfer port information management unit 248 and a timer information management unit 249.

The application flow definition unit 244 defines an IP flow of a predetermined application (hereinafter referred to as an application flow).

IP flow here represents a flow of an IP packet from a specific IP address to another specific IP address.

The application flow identification unit 241 checks an IP packet transmitted from the remote connection unit 41 and the remote acceptance unit 25 to identify an IP flow or not which is related to the IP packet as an application flow defined by the application flow definition unit 244.

The application flow identification unit 241 abandons the IP packet when the IP flow related to the IP packet is not defined by the application flow definition unit 244.

When the IP flow related to the IP packet is defined by the application flow definition unit 244, the application flow identification unit 241 transfers a determination result to that effect to the virtual desktop flow checking unit 242.

The virtual desktop flow checking unit 242 inquires whether or not the application flow defined by the application flow definition unit 244 and the IP flow identified by the application flow identification unit 241 are already managed by the virtual desktop IP flow management unit 245.

When the IP flow is not managed by the virtual desktop IP flow management unit 245, the virtual desktop flow checking unit 242 makes a request for considering the IP flow as a management target to the virtual desktop IP flow management unit 245.

The virtual desktop IP flow management unit 245 manages information of a predetermined IP flow.

Regarding each IP flow, the virtual desktop IP flow management unit 245 registers information related to QoS, a transfer counter number, information about a transfer destination port and time registered as a management target at the QoS information management unit 246, the counter information management unit 247, the transfer port information management unit 248 and the timer information management unit 249 and manages the same.

The virtual desktop flow transfer unit 243 determines whether transfer of an IP packet is allowed or not based on the QoS information management unit 246 managed by the virtual desktop IP flow management unit 245.

When determining that the IP packet can be transferred, the virtual desktop flow transfer unit 243 obtains optimum transfer port information held by the network processing devices 30-1 to 30-4 from the transfer port information management unit 248. With respect to the counter information management unit 247, the virtual desktop flow transfer unit 243 also increments a transfer counter of an IP flow related to the IP packet.

Next, the virtual desktop flow transfer unit 243 transfers the IP packet to the remote acceptance unit 25 or the remote connection unit 41.

The QoS information management unit 246 manages information related to an IP flow such as a size (byte length), a transmission source IP address and a destination IP address of an IP packet.

The counter information management unit 247 manages a counter value of each IP flow.

The transfer port information management unit 248 manages transfer port information of the network processing device 30.

The timer information management unit 249 manages time when an IP flow is registered by the virtual desktop IP flow management unit 245.

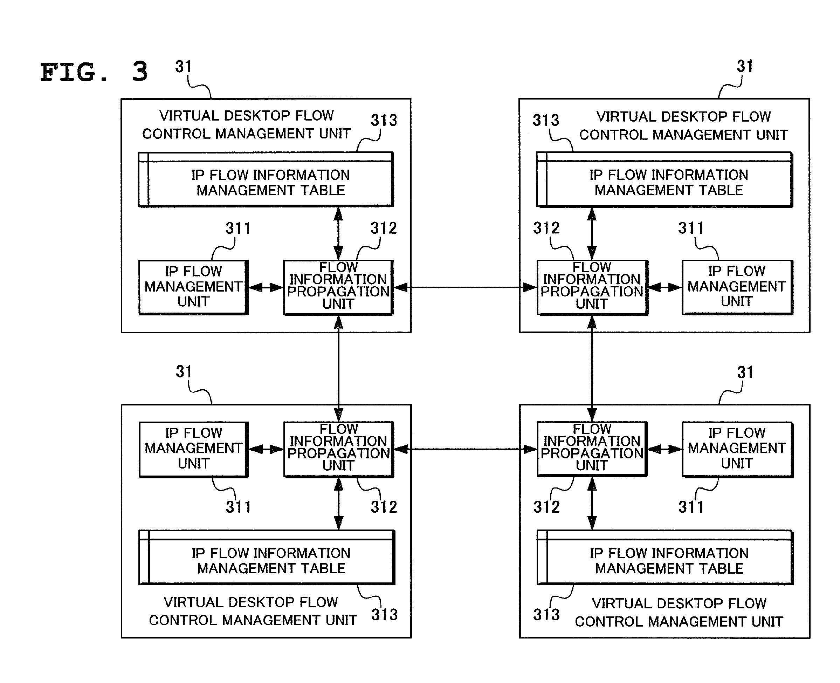

Fig. 3 is a block diagram showing a configuration related to propagation of IP flow information in the network processing device 30 (30-1 to 30-4). Propagation of IP flow information in the virtual switch 23 has the same configuration and operation, no description of which will be made thereof for the sake of simplification.

With reference to Fig. 3, a virtual desktop flow control management unit 31, in terms of a configuration related to propagation of IP flow information, includes an IP flow management unit 311, a flow state propagation unit 312 and an IP flow information management table 313.

In the configuration related to remote connection, the virtual desktop flow control management unit 31 has the configuration shown in Fig. 2.

The flow information propagation unit 312 propagates information of an IP flow managed by the IP flow information management table 313.

The flow information propagation unit 312 stores information of an IP flow propagated in the IP flow information management table 313 based on the information obtained from the IP flow management unit 311.

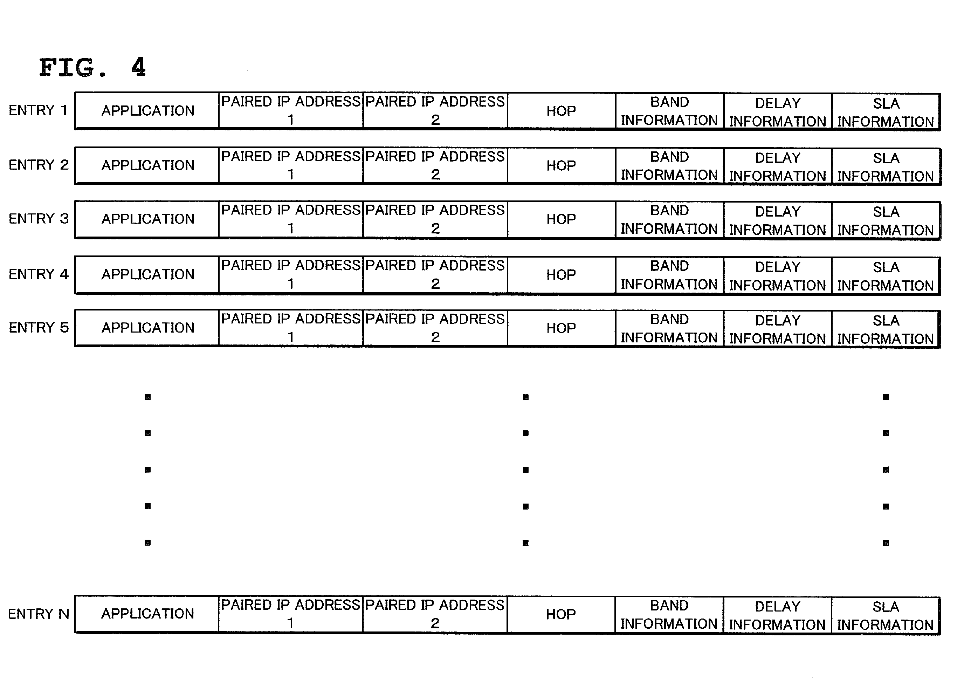

Structure example of the IP flow information management table 313 is here shown in Fig. 4.

An entry is generated and managed on an IP flow basis. An information field stored in each entry is outlined as follows.

An application field stores a communication protocol of a virtual desktop to be mainly used.

A paired IP address 1 field stores a transmission source IP address or a destination IP address of an end node which is executing remote connection.

A paired IP address 2 field also stores the same information as that of the paired IP address 1 field. Stored information will be exclusive to the paired IP address 1. A combination between the paired IP address 1 and the paired IP address 2 becomes an IP flow.

A hop field stores hop information of the network.

A band information field stores a value of a bandwidth used by an IP flow.

A delay information field stores a transfer delay time of an IP flow.

An SLA (Service Level Agreement) information field stores active information and service level definition information.

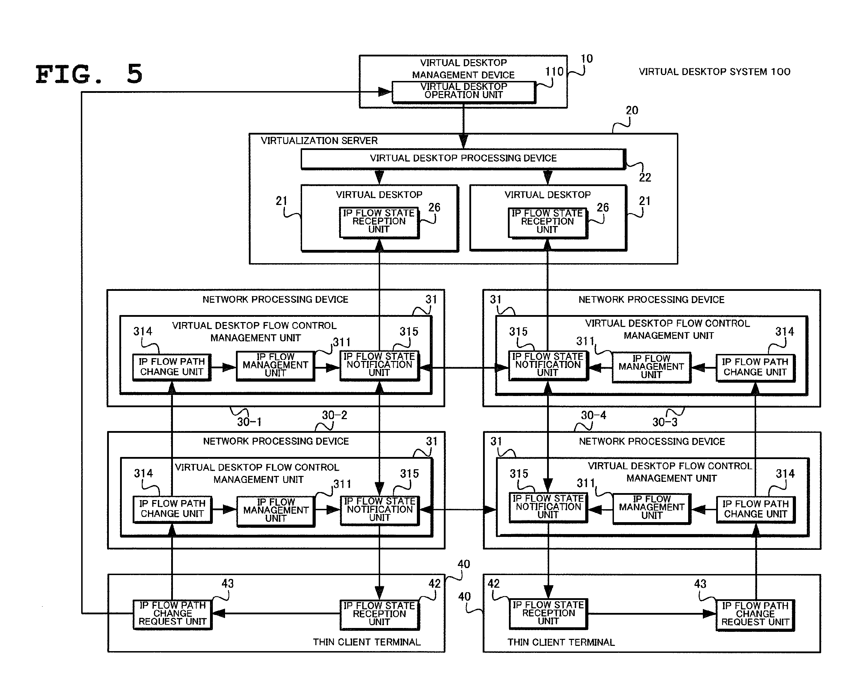

Reference is here made to Fig. 5 which is a block diagram showing a configuration related to IP flow state notification and path request for use in virtual desktop service in the virtual desktop system 100 according to the present exemplary embodiment.

In outline, the configuration in Fig. 5 has the following functions.

The virtual desktop management device 10 includes a virtual desktop operation unit 110.

The virtual desktop 21 includes an IP flow state reception unit 26.

The virtual desktop flow control management unit 31 of the network processing device 30 includes an IP flow state notification unit 315, an IP flow path change unit 314 and the IP flow management unit 311.

The thin client terminal 40 includes an IP flow state reception unit 42 and an IP flow path change request unit 43.

In outline, these units operate in the following manner.

Upon a request from the IP flow path change request unit 43, the virtual desktop operation unit 110 cooperates with the virtual desktop processing device 22 to shift the virtual desktop 21 to a different virtual desktop processing device 22.

Shifting is not realized by the technique according to the present invention but by existing virtualization techniques (while a software product recited in the Non-Patent Literature 1 provides a dynamic shifting function called VMware VMotion, the present invention does not need shifting to be dynamic).

The IP flow state reception unit 26 receives a state of an IP flow passing on the network from the IP flow state notification unit 315.

The IP flow state notification unit 315 obtains information from the IP flow management unit 311 and notifies the adjacent virtual desktop flow control management unit 31 of the state of the passing IP flow.

The IP flow path change unit 314 accepts a request from the IP flow path change request unit 43 as a user's request and transfers the request to other IP flow path change unit 314 in the network.

On this occasion, the IP flow path change unit 314 executes processing in cooperation with the IP flow management unit 311 in order to change a relevant path, thereby changing a path to enable a flow to pass through an optimum path.

The IP flow state reception unit 42 receives a state of an IP flow from the IP flow state notification unit 315 and provides the information to the IP flow path change request unit 43 to execute an appropriate processing request.

The IP flow path change request unit 43 transmits an IP flow path change request to the IP flow path change unit 314 adjacently connected according to the user's request or to the virtual desktop operation unit 110.

### (DESCRIPTION OF OPERATION OF THE FIRST EXEMPLARY EMBODIMENT)

Next, operation of the virtual desktop system 100 according to the present exemplary embodiment will be detailed with reference to the drawings.

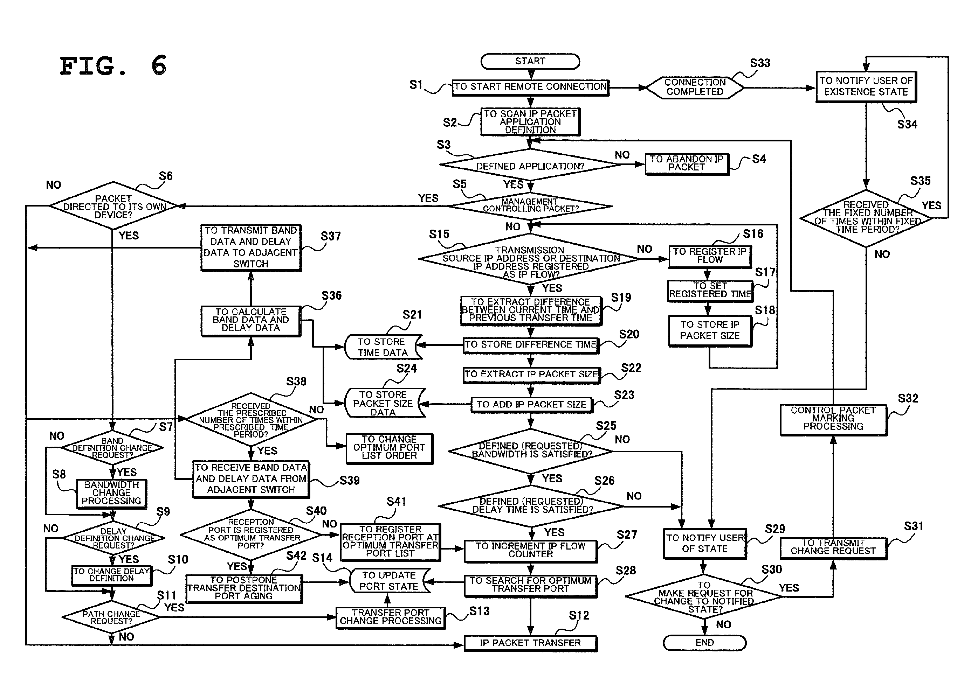

Fig. 6 is a flow chart showing operation of the virtual desktop system 100 according to the present exemplary embodiment.

With reference to Fig. 6, first, the remote connection unit 41 starts remote connection to the virtual desktop 21 of the user (Step S1).

Subsequently, the remote acceptance unit 25 receives a connection request from the remote connection unit 41 to establish connection (Step S33).

When the connection is established, the remote acceptance unit 25 communicates with the virtual desktop flow control management unit 24 in the same server and then transmits an existence notification to the remote connection unit 41 (Step S34).

The remote connection unit 41 checks whether it has received the existence notification the fixed number of times within a fixed time period (Step S35). When received, return to the processing of Step S34.

When the remote connection unit 41 fails to have received the existence notification the fixed number of times within a fixed time period ("No" at Step S35), the processing shifts to Step S29.

On the other hand, in the network processing device 30, the application flow identification unit 241 of the virtual desktop flow control management unit 31 identifies an IP flow related to an IP packet transmitted at Step S1 as corresponds to an application flow defined by the application flow definition unit 244 (Step S2).

When at Step S1, the IP flow related to the IP packet transmitted fails to correspond to the application flow defined by the application flow definition unit 244 ("NO" at Step S3), the application flow identification unit 241 abandons the IP packet (Step S4).

When at Step S1, the IP flow related to the IP packet transmitted corresponds to the application flow defined by the application flow definition unit 244 ("YES" at Step S3), the virtual desktop flow control management unit 31 determines whether the IP packet is a management controlling packet for use in the network (Step S5).

When the IP packet is a management controlling packet for use in the network ("YES" at Step S5), the virtual desktop flow control management unit 31 identifies the IP packet as being or not being directed to the network node (the device of its own) in which the virtual desktop flow control management unit 31 operates (Step S6).

When the IP packet is an IP packet directed to the device of its own, the virtual desktop flow control management unit 31 identifies the IP packet as being or not being a request for content change of a band definition (Step S7).

When the packet is a bandwidth change request ("YES" at Step S7), the virtual desktop flow control management unit 31 executes bandwidth change processing (Step S8).

Subsequently, the virtual desktop flow control management unit 31 identifies the IP packet as a delay definition change request or not (Step S9).

When the packet is a delay definition change request ("YES" at Step S9), the virtual desktop flow control management unit 31 executes delay definition change processing (Step S10).

Subsequently, the virtual desktop flow control management unit 31 identifies the IP packet as a request for a path change in the network or not (Step S11).

When the IP packet is not a path change request ("NO" at Step S11), the virtual desktop flow control management unit 31 transfers the IP packet (Step S12).

When the IP packet is a path change processing request ("YES" at Step S11), the virtual desktop flow control management unit 31 updates the transfer port information management unit 248 (Steps S 13 and S 14).

When the IP packet is not directed to the device of its own ("NO" at Step S6), the virtual desktop flow control management unit 31 transfers the IP packet to the adjacent network processing device 30 (S12). In more detail, the transfer processing is executed by the virtual desktop flow transfer unit 243.

When the IP packet is not a management controlling packet ("NO" at Step S5), the virtual desktop flow control management unit 31 identifies a transmission source IP address or a destination IP address of the transmitted IP packet as an IP flow managed by the virtual desktop flow management unit 245 or not (Step S 15). In more detail, the virtual desktop flow checking unit 242 inquires of the virtual desktop IP flow management unit 245 whether the IP is managed or not managed by the virtual desktop IP flow management unit 245.

When the IP packet is registered as an IP flow not managed by the virtual desktop flow management unit 245 ("NO" at Step S 15), the virtual desktop flow checking unit 242 issues a registration request to the virtual desktop flow management unit 245, so that the virtual desktop flow management unit 245 executes the registration (Step S16).

When executing the registration, the virtual desktop flow management unit 245 registers the registered time at the timer information management unit 249 (Step S 17) and causes the QoS information management unit 246 to store a size (byte length) of the sent IP packet (Step S 18). Thereafter, return to Step S 15.

When the sent IP packet is registered as an IP flow managed by the virtual desktop flow unit 245 ("YES" at Step S 15), the virtual desktop flow management unit 245 reads time of previous IP flow transfer and current time from the timer information management unit 249 to calculate a difference between the times (Step S 19) and stores a difference time for the IP flow in the timer information management unit 249 (Step S20).

In addition, simultaneously with the processing of Step S20, the virtual desktop flow management unit 245 stores current IP flow processing time in the timer information management unit 249 to assume the same as data for use in subsequent difference calculation (Step S21).

After the processing of Step S20, the virtual desktop flow management unit 245 extracts an IP packet size (Step S22) and stores the IP packet size to be managed as an IP flow in the QoS information management unit 246 (Steps S23 and S24).

After the processing of Step S23, the virtual desktop flow management unit 245 reads a state of the transmitted IP flow from the QoS information management unit 246 to check whether the read state satisfies the defined bandwidth (Step S25).

When the defined bandwidth is satisfied ("YES" at Step S25), the virtual desktop flow management unit 245 checks whether the defined delay time is satisfied (Step S26).

When the defined delay time is satisfied ("YES" at Step S27), the virtual desktop flow management unit 245 increments a counter value of the counter information management unit 247 (Step S27).

Subsequently, the virtual desktop flow management unit 245 refers to the transfer port information management unit 248 (Step S28), so that the virtual desktop flow transfer unit 243 transfers the IP packet to a relevant port (Step S12).

When the processing at Step S25 or Step S26 fails to satisfy the condition, the virtual desktop flow control management unit 31 notifies the remote connection unit 41 of a network use state (Step S29).

Notifying the use state enables urging a user to meet the bandwidth definition change request or the delay definition change request (Step S30).

When the user executes the change request (Step S31), the thin client terminal 40 executes marking processing of indicating a control packet to the IP packet (Step S32). At Step S32, marking is also executed for indicating that the processing is for the virtual desktop of the user himself/herself. Thereafter, return to Step S3 to execute processing.

At Step S36, the virtual desktop flow control management unit 31 calculates band data and delay data and sets up IP flow information based on Fig. 3 to transmit the IP flow information to the adjacent network processing unit 30 (Step S37). As a result, synchronization of service states of an IP flow in the network is established.

Conversely at Step S38, the adjacent network processing device 30 checks whether it has received the IP flow information the fixed number of times within a fixed time period (Step S38).

When not received ("NO" at Step S38), since a relevant reception port will not be an optimum transfer destination port, the virtual desktop flow control management unit 31 changes an optimum port list in the transfer port information management unit 248.

When received ("YES" at Step S38), the virtual desktop flow control management unit 31 extracts necessary service level information (Step S39) to check whether the reception port is registered as an optimum transfer port (Step S40).

When not registered ("NO" at Step S40), the virtual desktop flow control management unit 31 registers the reception port at the optimum transfer port list managed by the transfer port information management unit 248 (Step S41) to shift to execution of the processing at Step S27.

When registered ("YES" at Step S40), the virtual desktop flow control management unit 31 executes transfer port validity period extension processing (Step S42) to update a port state to be valid (Step S 14).

### (EFFECTS OF THE FIRST EXEMPLARY EMBODIMENT)

Next, effects of the present exemplary embodiment will be described.

First effect is enabling a service user himself or herself to identify a service failure as a problem on a virtual desktop side or on a network side. The reason is that a means for monitoring the virtual desktop itself and a means for monitoring a network used by the virtual desktop are separately disposed to transmit identification information onto the network by mutual activeness/inactiveness monitoring.

Second effect is automatic switching to an optimum path at the time of occurrence of a failure on the network or rapid load increase, thereby enabling a user to use service while maintaining the service level without noticing the problem.

The reason is that the network processing devices execute traffic transfer while maintaining optimum path information for each service to be used by dynamically transmitting and receiving path information to each other taking service to be used in consideration.

Third effect is enabling operation such as virtual desktop optimum disposition and restarting to be executed as required by selecting an optimum path by a user himself or herself.

The reason is that the user himself or herself can grasp a condition of use of the virtual desktop and the network by the means provided by the first and second effects.

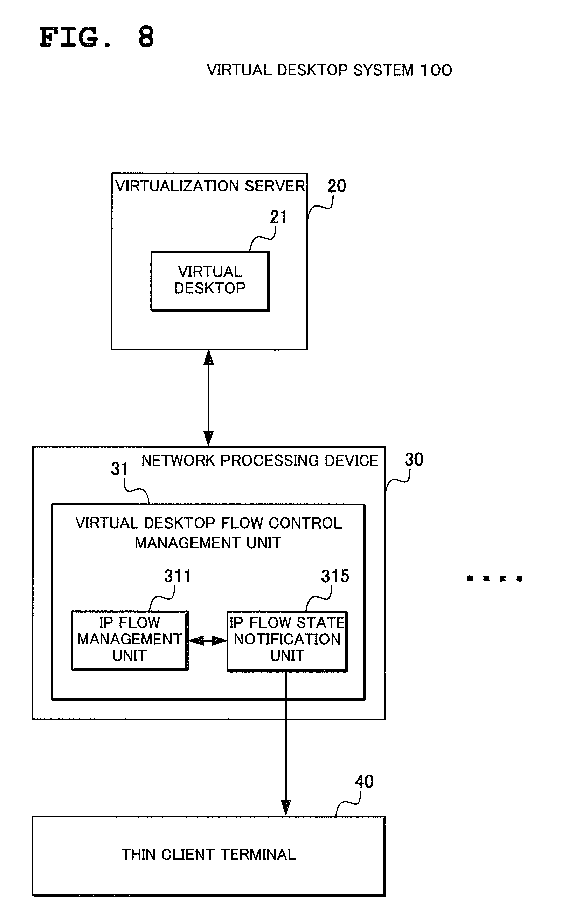

Minimum configuration which can solve the problems of the present invention is shown in Fig. 8. The problems of the present invention can be solved by the virtual desktop system 100 including the virtualization server 20 having the virtual desktop 21, the thin client terminal 40 which uses the virtual desktop 21 by remote connection, and a plurality of the network processing devices 30 which connect the virtualization server 20 and the thin client terminal 40, and the network processing devices 30 each including the IP flow management unit 311 which manages information of an IP flow related to remote connection of the thin client terminal 40, and the IP flow state notification unit 315 which, when receiving an IP packet related to remote connection, if an IP flow related to the IP packet fails to satisfy a bandwidth or a delay time defined in advance, notifies a new client terminal to that effect.

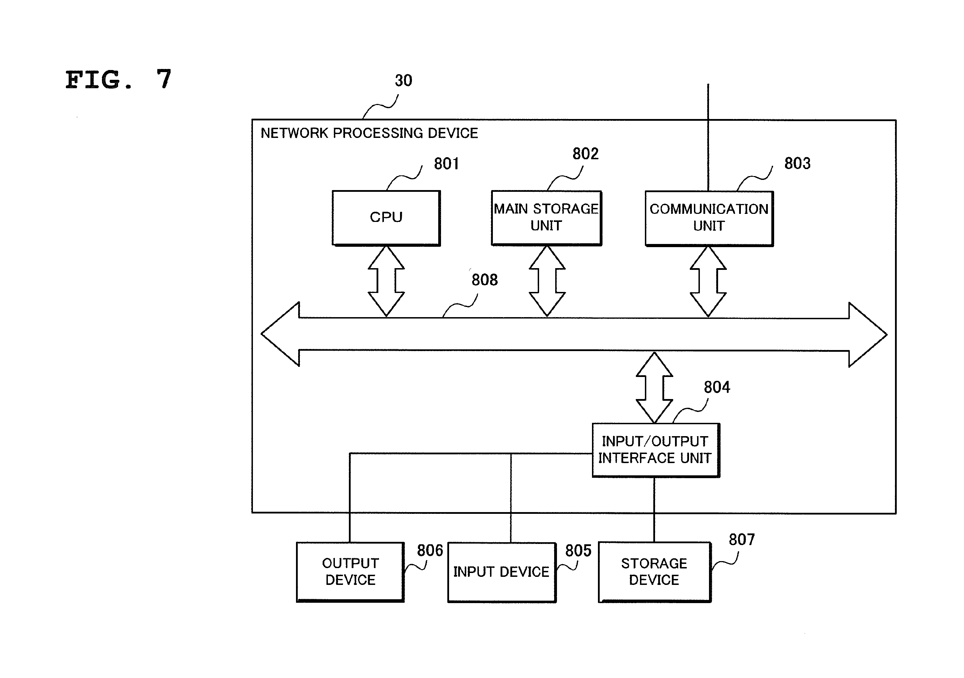

Next, an example of a hardware configuration of the network processing device 31 of the present invention will be described with reference to Fig. 7. Fig. 7 is a block diagram showing an example of a hardware configuration of the network processing device 31.

With reference to Fig. 7, the network processing device 31 of the present invention, which has the same hardware configuration as that of a common computer device, comprises a CPU (Central Processing Unit) 801, a main storage unit 802 formed of a memory such as a RAM (Random Access Memory) for use as a data working region or a data temporary saving region, a communication unit 803 which transmits and receives data through a network, an input/output interface unit 804 connected to an input device 805, an output device 806 and a storage device 807 to transmit and receive data, and a system bus 808 which connects each of the above-described components with each other. The storage device 807 is realized by a hard disk device or the like which is formed of a non-volatile memory such as a ROM (Read Only Memory), a magnetic disk or a semiconductor memory.

Each function of the network processing device 30 of the present invention has its operation realized not only in hardware by mounting a circuit part which is a hardware part such as an LSI (Large Scale Integration) with a program incorporated but also in software by storing a program which provides the function in the storage device 807, loading the program into the main storage unit 802 and executing the same by the CPU 801.

The virtualization server 20, the thin client terminal 40 and the virtual desktop management device 10 also have such a hardware configuration as described above to realize each function that each device has in hardware or software.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

An arbitrary combination of the foregoing components and conversion of the expressions of the present invention to/from a method, a device, a system, a recording medium, a computer program and the like are also available as a mode of the present invention.

In addition, the various components of the present invention need not always be independent from each other, and a plurality of components may be formed as one member, or one component may be formed by a plurality of members, or a certain component may be a part of other component, or a part of a certain component and a part of other component may overlap with each other, or the like.

While the method and the computer program of the present invention have a plurality of procedures recited in order, the order of recitation is not a limitation to the order of execution of the plurality of procedures. When executing the method and the computer program of the present invention, therefore, the order of execution of the plurality of procedures can be changed without hindering the contents.

Moreover, execution of the plurality of procedures of the method and the computer program of the present invention are not limitedly executed at timing different from each other. Therefore, during the execution of a certain procedure, other procedure may occur, or a part or all of execution timing of a certain procedure and execution timing of other procedure may overlap with each other, or the like.

Furthermore, a part or all of the above-described exemplary embodiments can be recited as the following claims but are not to be construed limitative.

The whole or part of the exemplary embodiments disclosed above can be described as, but not limited to, the following supplementary notes.
(Supplementary note 1.) A virtual desktop system comprising:
   a virtualization server including a virtual desktop,
   a thin client terminal which uses said virtual desktop in remote connection, and
   a plurality of network processing devices each of which connects said virtualization server and said thin client terminal,
   wherein each of said network processing devices including
   an IP flow management unit which manages information of an IP flow related to said remote connection of said thin client terminal, and
   an IP flow state notification unit which, when receiving an IP packet related to said remote connection, if said IP flow related to the IP packet fails to satisfy a bandwidth or a delay time defined in advance, notifies said thin client terminal to that effect.
(Supplementary note 2.) The virtual desktop system according to supplementary note 1, wherein
   said thin client terminal includes an IP flow path change request unit which transmits a request for path change of said IP flow to fixed one of said network processing devices, and
   said network processing devices each include an IP flow path change unit which changes a path of said IP flow in response to a request for path change of said IP flow.
(Supplementary note 3.) The virtual desktop system according to supplementary note 1 or supplementary note 2, wherein said IP flow state notification unit of each of said network processing devices notifies information related to a state of said IP flow to each other to share the information related to the state of said IP flow.
(Supplementary note 4.) The virtual desktop system according to supplementary note 3, wherein said network processing devices each include a transfer port information management unit which changes a reception port of the device itself when said IP flow state notification unit fails to receive information related to a state of said IP flow from other network processing device the fixed number of times within a fixed time period.
(Supplementary note 5.) The virtual desktop system according to any one of supplementary note 1 through supplementary note 4, wherein said network processing devices each include an IP flow information management table which holds a state of said IP flow, said IP flow information management table including at least information of a bandwidth used by said IP flow and information of a transfer delay time of said IP flow.
(Supplementary note 6.) The virtual desktop system according to any one of supplementary note 1 through supplementary note 5, wherein said virtual desktop includes a remote acceptance unit which receives a remote connection request from said thin client terminal, said remote acceptance unit transmitting an existence notification indicating that connection is normally executed at fixed intervals to said thin client terminal.
(Supplementary note 7.) The virtual desktop system according to supplementary note 6, wherein said thin client terminal includes a remote connection unit which makes a remote connection request to said virtual desktop, said remote connection unit, when failing to receive said existence notification for a fixed time period, determines that the remote connection develops a fault.
(Supplementary note 8.) In a virtual desktop system comprising a virtualization server including a virtual desktop, a thin client terminal which uses said virtual desktop in remote connection, and
a plurality of network processing devices each of which connects said virtualization server and said thin client terminal, each of said network processing devices comprising:
   an IP flow management unit which manages information of an IP flow related to said remote connection of said thin client terminal, and
   an IP flow state notification unit which, when receiving an IP packet related to said remote connection, if said IP flow related to the IP packet fails to satisfy a bandwidth or a delay time defined in advance, notifies said thin client terminal to that effect.
(Supplementary note 9.) The network processing device according to supplementary note 8, comprising an IP flow path change unit which changes a path of said IP flow in response to a request for path change of said IP flow from said thin client terminal.
(Supplementary note 10.) The network processing device according to supplementary note 8 or supplementary note 9, wherein said IP flow state notification unit of each of said network processing devices notifies information related to a state of said IP flow to each other to share the information related to the state of said IP flow.
(Supplementary note 11.) The network processing device according to supplementary note 10, comprising a transfer port information management unit which changes a reception port of the device itself when said IP flow state notification unit fails to receive information related to a state of said IP flow from other network processing device the fixed number of times within a fixed time period.
(Supplementary note 12.) The network processing device according to any one of supplementary note 8 through supplementary note 11, comprising an IP flow information management table which holds a state of said IP flow, said IP flow information management table including at least information of a bandwidth used by said IP flow and information of a transfer delay time of said IP flow.
(Supplementary note 13.) A method of managing a virtual desktop system comprising a virtualization server including a virtual desktop, a thin client terminal which uses said virtual desktop in remote connection, and a plurality of network processing devices each of which connects said virtualization server and said thin client terminal, wherein each of said network processing devices performs:
   an IP flow management step of managing information of an IP flow related to said remote connection of said thin client terminal, and
   an IP flow state notification step of, when receiving an IP packet related to said remote connection, if said IP flow related to the IP packet fails to satisfy a bandwidth or a delay time defined in advance, notifying said thin client terminal to that effect.
(Supplementary note 14.) The management method according to supplementary note 13, wherein each of said network processing devices comprises an IP flow path change step of changing a path of said IP flow in response to a request for path change of said IP flow from said thin client terminal.
(Supplementary note 15.) The management method according to supplementary note 13 or supplementary note 14, wherein said IP flow state notification step of each of said network processing devices includes notifying information related to a state of said IP flow to each other to share the information related to the state of said IP flow.
(Supplementary note 16.) The management method according to supplementary note 15, wherein said IP flow state notification step includes changing a reception port of the device itself when failing to receive information related to a state of said IP flow from other network processing device the fixed number of times within a fixed time period.
(Supplementary note 17.) The management method according to any one of supplementary note 13 through supplementary note 16, comprising an IP flow information management table which holds a state of said IP flow, said IP flow information management table including at least information of a bandwidth used by said IP flow and information of a transfer delay time of said IP flow.
(Supplementary note 18.) In a virtual desktop system comprising a virtualization server including a virtual desktop, a thin client terminal which uses said virtual desktop in remote connection, and a plurality of network processing devices each of which connects said virtualization server and said thin client terminal, a management program which is operable on each of said network processing devices and which causes said network processing devices to execute:
   an IP flow management processing of managing information of an IP flow related to said remote connection of said thin client terminal, and
   an IP flow state notification processing of, when receiving an IP packet related to said remote connection, if said IP flow related to the IP packet fails to satisfy a bandwidth or a delay time defined in advance, notifying said thin client terminal to that effect.
(Supplementary note 19.) The management program according to supplementary note 18, which causes said network processing devices to execute an IP flow path change processing of changing a path of said IP flow in response to a request for path change of said IP flow from said thin client terminal.
(Supplementary note 20.) The management program according to supplementary note 18 or supplementary note 19, wherein said IP flow state notification processing of each of said network processing devices includes notifying information related to a state of said IP flow to each other to share the information related to the state of said IP flow.
(Supplementary note 21.) The management program according to supplementary note 20, wherein when failing to receive information related to a state of said IP flow from other network processing device the fixed number of times within a fixed time period, said IP flow state notification processing includes changing a reception port of the device itself.
(Supplementary note 22.) The management program according to any one of supplementary note 13 through supplementary note 16, comprising an IP flow information management table which holds a state of said IP flow, said IP flow information management table including at least information of a bandwidth used by said IP flow and information of a transfer delay time of said IP flow.

## Claims

1. A virtual desktop system comprising:
a virtualization server including a virtual desktop;
a thin client terminal which uses said virtual desktop in remote connection; and
a plurality of network processing devices each of which connects said virtualization server and said thin client terminal,
wherein each of said network processing devices including
an IP flow management unit which manages information of an IP flow related to said remote connection of said thin client terminal, and
an IP flow state notification unit which, when receiving an IP packet related to said remote connection, if said IP flow related to the IP packet fails to satisfy a bandwidth or a delay time defined in advance, notifies said thin client terminal to that effect.

2. The virtual desktop system according to claim 1, wherein
said thin client terminal includes an IP flow path change request unit which transmits a request for path change of said IP flow to fixed one of said network processing devices, and
said network processing devices each include an IP flow path change unit which changes a path of said IP flow in response to a request for path change of said IP flow.

3. The virtual desktop system according to claim 1 or claim 2, wherein said IP flow state notification unit of each of said network processing devices notifies information related to a state of said IP flow to each other to share the information related to the state of said IP flow.

4. The virtual desktop system according to claim 3, wherein said network processing devices each include a transfer port information management unit which changes a reception port of the device itself when said IP flow state notification unit fails to receive information related to a state of said IP flow from other network processing device the fixed number of times within a fixed time period.

5. The virtual desktop system according to any one of claim 1 through claim 4, wherein said network processing devices each include an IP flow information management table which holds a state of said IP flow, said IP flow information management table including at least information of a bandwidth used by said IP flow and information of a transfer delay time of said IP flow.

6. The virtual desktop system according to any one of claim 1 through claim 5, wherein said virtual desktop includes a remote acceptance unit which receives a remote connection request from said thin client terminal, said remote acceptance unit transmitting an existence notification indicating that connection is normally executed at fixed intervals to said thin client terminal.

7. The virtual desktop system according to claim 6, wherein said thin client terminal includes a remote connection unit which makes a remote connection request to said virtual desktop, said remote connection unit, when failing to receive said existence notification for a fixed time period, determines that the remote connection develops a fault.

8. In a virtual desktop system comprising a virtualization server including a virtual desktop, a thin client terminal which uses said virtual desktop in remote connection, and a plurality of network processing devices each of which connects said virtualization server and said thin client terminal, wherein each of said network processing devices comprising:
an IP flow management unit which manages information of an IP flow related to said remote connection of said thin client terminal; and
an IP flow state notification unit which, when receiving an IP packet related to said remote connection, if said IP flow related to the IP packet fails to satisfy a bandwidth or a delay time defined in advance, notifies said thin client terminal to that effect.

9. A method of managing a virtual desktop system comprising a virtualization server including a virtual desktop, a thin client terminal which uses said virtual desktop in remote connection, and a plurality of network processing devices each of which connects said virtualization server and said thin client terminal, wherein each of said network processing devices performs:
an IP flow management step of managing information of an IP flow related to said remote connection of said thin client terminal; and
an IP flow state notification step of, when receiving an IP packet related to said remote connection, if said IP flow related to the IP packet fails to satisfy a bandwidth or a delay time defined in advance, notifying said thin client terminal to that effect.

10. In a virtual desktop system comprising a virtualization server including a virtual desktop, a thin client terminal which uses said virtual desktop in remote connection, and a plurality of network processing devices each of which connects said virtualization server and said thin client terminal, a management program which is operable on each of said network processing devices and which causes said network processing devices to execute:
an IP flow management processing of managing information of an IP flow related to said remote connection of said thin client terminal; and
an IP flow state notification processing of, when receiving an IP packet related to said remote connection, if said IP flow related to the IP packet fails to satisfy a bandwidth or a delay time defined in advance, notifying said thin client terminal to that effect.
